Europäisches Patentamt

European Patent Office

Office européen des brevets

(11) Publication number: 0 375 157
A2

## EUROPEAN PATENT APPLICATION

(21) Application number: 89312036.0

(22) Date of filing: 21.11.89

(51) Int. Cl.⁵: G01N 23/14, G01N 23/10, G01V 5/00, B07C 5/34

(30) Priority: 28.11.88 GB 8827790
23.08.89 GB 8919129

(43) Date of publication of application:
27.06.90 Bulletin 90/26

(84) Designated Contracting States:
DE FR GB IT NL

(71) Applicant: INTERTEST LTD.
Vaux Road Finedon Road Industrial Estate
Wellingborough Northants NN8 4TG(GB)

(72) Inventor: King, Nigel John
48A George Street
Maulden Bedfordshire MK45 2DF(GB)
Inventor: Gusterson, Stephen Philip
85 Watermeadow Drive
Northampton NN3 4ST(GB)

(74) Representative: Singleton, Jeffrey et al
ERIC POTTER & CLARKSON 27 South Street
Reading Berkshire, RG1 4QU(GB)

(54) On-line X-ray inspection system.

(57) On-line X-ray inspection system has real-time data processing means (4) operable to receive the output signal from detector means (11) and analyse that signal, and automatic sensitivity control means operable to maintain substantially constant the sensitivity of the inspection system irrespective of any drift which may occur in the detector means (11) and/or source of X-rays (1).

Fig. 1

## ON-LINE X-RAY INSPECTION SYSTEM

This invention relates to on-line x-ray inspection systems and has particular, but not exclusive, reference to such systems for the food industry.

In the food industry, there are a number of situations that require analysis during the production of food products, such as the presence of foreign objects in food being processed and the actual content of the food, for example as between bone and flesh, or as between fat and lean. Food processing plants run continuously for long periods, not infrequently 24 hours a day, 7 days a week, whereby it is essential to have an on-line inspection system that will conduct the desired analysis in real time and take whatever action is necessary based on the results of the analysis being made. To-date, the inspection of food processing plants has been by way of batch sampling which is very time-consuming and of little practical value in controlling the parameters of the process in order to achieve the required food product. Furthermore, such batch sampling does not, of course, effect any overall inspection of the ingredients of the food product being produced as to the presence of contaminants.

X-ray inspection systems are known for inspecting baggage at airports, for example, in order to ascertain whether any illegal material and/or objects are being carried by passengers. Such a system is disclosed in US-A-4366382 and there is reference therein to the fact that the system can be used for the non-destructive testing and inspection of materials and products such as food although there is no detailed discussion as to how precisely these other applications would be implemented. It is known that apparatus similar to that disclosed in US-A-4366382 has been used to detect the presence of shells or shell particles in shelled almond nuts, the system operating to energise a light and to direct it onto a detected shell or shell fragment in order that a human operator can extract that contaminant. In view of the required intervention of a human operator, the speed of the production line has to be relatively slow and this equipment has not enjoyed commercial success. Furthermore, the equipment requires calibration at regular intervals, which in practice may be every 20 minutes or less and in order for this calibration to be effected, it is necessary to clear the conveyor or pipe line carrying the material being inspected and clearly, this is not a practical proposition in many instances, such as food processing. Even if it were, the amount of down-time of the plant for calibration purposes is unacceptable, but if not carried out results in the inspection procedure being of little or no value after a period of time.

According to the present invention there is provided an on-line material inspection system comprising a source of x-rays, collimator means operable to produce a planar beam of x-rays through which beam material to be inspected is in use passed, detector means in the form of a linear array of photo-sensitive means spaced from, and located opposite, the source of x-rays and arranged in substantially the same plane as the beam of x-rays, the detector means being operable to detect the x-rays passing through the material under inspection and provide an output signal representative thereof, system control means comprising real-time data processing means operable to receive the output signal from the detector means and analyse that signal and to produce an output signal on the basis of the analysis, the control system also comprising automatic sensitivity control means operable to maintain substantially constant the sensitivity of the inspection system irrespective of any drift which may occur in the detector means and/or source of x-rays.

It is essential that any on-line inspection system is maintained at optimum sensitivity in order to provide consistent results of the inspection effected. The two main sources of drift which can affect sensitivity are temperature drift in the detector and drift in the x-ray flux. Detector drift is perhaps more critical in as much as it liable to produce variations in the output signal along the array, whereas any drift in x-ray flux will give rise to a uniform variation in intensity at the detector. With this is mind, a preferred feature of the present invention is the disposition of the detector means in a housing which is provided with means for maintaining the internal temperature thereof substantially constant. The housing may be heated electrically and a circulating fan provided to ensure an even temperature throughout the housing. The housing is preferably thermostatically controlled to within 2° C and monitored by the system control means.

The analysis of a product is preferably carried out on the basis that incoming data is compared with a predetermined threshold, this threshold being continually monitored and updated. The system is capable of detecting data above and below the current threshold, i.e. detecting high and low density or voiding, with the product travelling at a speed of 60 metres per minutes with respect to the detecting means, with a resolution of detecting 1mm of steel, for example, in a product having a depth of 25mm.

The system may comprise multiple thresholding means which is an advantageous feature where a product under analysis has a variable cross-sectional thickness. It will be appreciated that the amount of x-rays absorbed is proportional to the thickness of the product under analysis and as contaminants, for example, are detected by an increase in absorbed x-rays, then the analysis of a wedge-shaped object presents difficulties. According to a preferred feature of the present invention, this difficulty is overcome by detecting the leading edge of the product under analysis as it breaks the x-ray beam. The predetermined threshold is then applied for a given number of lines inspected for say the first 25mm of the slope of the wedge. The system then switches to a second threshold for a given number of lines, and so on until all of the product has been analysed. It will be appreciated that with this multi-thresholding feature, it is possible to accommodate products with a variety of shapes and profiles. The multiple thresholding means may be expanded to demonstrate the number of levels of rejection available. For example, 512 lines may have individual values between 0 and 255.

Another difficulty encountered is that of analysing products having dense edges, for example a can. In order to overcome this problem, data may be captured from the detector means as the can passes over it and the edges of the can will appear dark in relation to the product contained in the can. This edge value is calculated by the data processing means with a predetermined hysteresis and the data processing means is then arranged to search a memory for any pixels in the memory with a value lower than this selected number. If one is found, a border is built up around it of value zero to enable a certain level of registration error to be accepted. This is performed throughout the memory and the memory is then scanned for any pixels lower than or equal to the can edge value. Any pixels which are found are written into a memory mask. As the can passes over the detector means, the mask memory data is strobed out as each data byte from the detector means is output. If a mask bit is set, a rejection is suppressed at that pixel because the original edge of the can had its boundary at that point.

According to another aspect of the present invention there is provided a method of on-line material inspection comprising the steps of providing a planar beam of. X-rays through which material to be inspected is in use passed, detecting the X-rays passing through the material under inspection and providing an output signal representative thereof, providing real-time data processing means operable to receive said output signal and analyse that signal and to produce an output signal, providing mask means having one or more areas cut therefrom appropriate to the material being inspected, passing the mask means through the X-ray beam, memorising the resultant detected output signals and comparing detected output signals from material under inspection with said memorised signals to produce a signal indicative of required material density.

According to another aspect of the present invention there is provided a material inspection system comprising X-ray inspection means and conveyor means operable to conveyor material to be inspected to the X-ray inspection means, the conveyor means comprising converging upper and lower conveyors arranged such that the material is presented to the X-ray inspection means at a controlled thickness.

On-line systems for analysing a product in accordance with the present invention will now be described in greater detail, by way of example, with reference to the accompanying drawings, in which:-

Figure 1 is a schematic layout, in block diagram form, of one system,

Figures 2 to 6 are more detailed block diagrams of parts of the system of Figure 1,

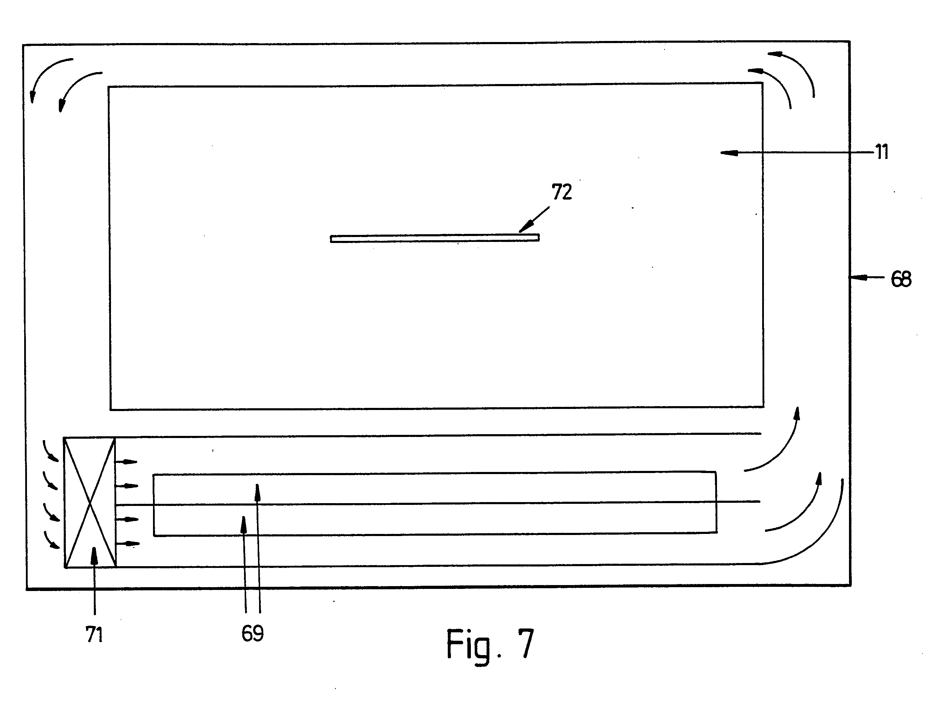

Figure 7 is a diagrammatic detail of a further component of the system of Figure 1,

Figures 8 and 9 are diagrams useful in explaining one preferred feature of the present invention, and

Figure 10 is a diagrammatic side view of part of another embodiment of the invention.

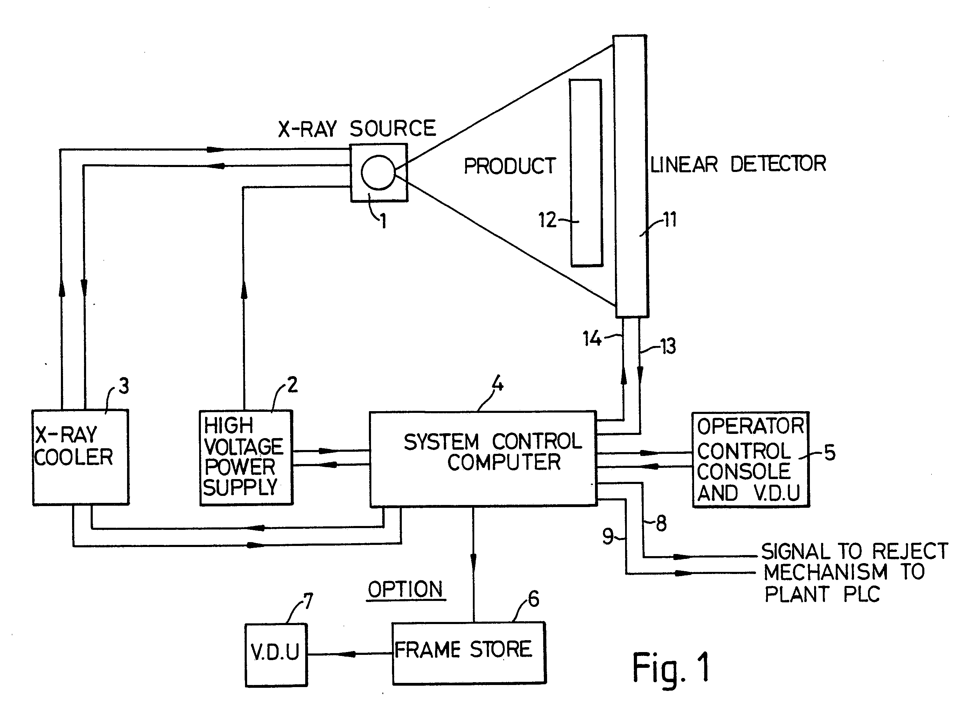

Referring first to Figure 1 of the drawings, the system comprises a source of x-rays 1 energised by a high voltage supply 2 and cooled by an x-ray cooler 3, the power supply and cooler each being controlled from system control means in the form of a computer 4. The computer 4 has associated with it an operator control console and VDU 5 and a frame store 6 with an associated VDU 7, these two components being optional in as much as the system is an on-line system and is thus automatic in its operation as will be further described hereinafter. The computer 4 also provides a number of output signals, two of which are shown on lines 8 and 9, the signal on line 8 being applied to a reject mechanism, as will be further described, and the signal on line 9 being applied to some form a process controller for the overall plant into which the system according to the present invention is incorporated.

The x-rays produced by the x-ray source 1 are collimated to provide a very thin beam of rays of general fan shape and typically having a width of the order of 1mm. Opposite the x-ray source 1 there is mounted detector means 11 in the form of a linear array of photo-sensitive diodes with which is associated a scintillating layer of material. There are in fact 64 banks of diodes in the array and the diodes are reversed biased so that they work in the capacitive mode. Thus, it is the amount of charge to keep them "topped up" that is read as an output signal, this "topping up" being proportional to the light impinging on each diode of a result of x-rays reaching the scintillating layer from the x-ray source. The banks of diodes actually involve 1,024 diodes on a 0.45mm pitch so that the resolution of the detector means 11 is extremely high.

3

The detector means 11 is arranged not only to be opposite the x-ray source 1, as already mentioned, but also to be at right angles to the direction of movement of a product 12 to be analysed, which product would typically be carried on a conveyor belt of the order of 460mm wide. Thus, in use, x-rays from the source 1 pass through the product 12 before reaching the detector means 11 and it is the extent of absorption of these x-rays by the product which dictate the output of the diode array. Up to 750 "slices" per second of the product are analysed as the product passes the detector means 11.

The output from the diode array is applied on a line 13 to the system control computer 4 and the latter has an output line 14 connected to the detector means 11.

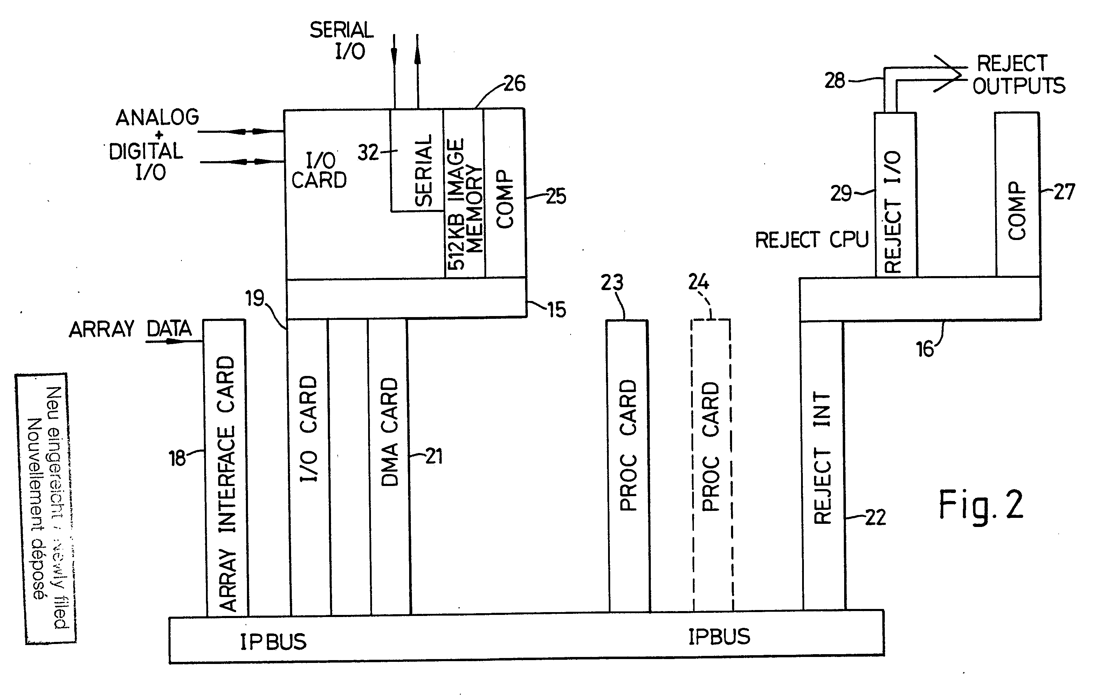

Referring now to Figure 2, the computer 4 is in fact a dual processor computer system comprising two computers 25 and 27 working in conjunction with a bus which will be referred to as IPBUS and which is a modular data processing system comprising four basic circuit boards 18, 19, 21 and 22 with further boards added to perform various functions as required, two such further boards being shown at 23 and 24. Table A below shows the various signal lines associated with the IPBUS with a brief description of their functions. It should be noted that for clarity, Figure 2 does not show the interconnections between the computers 25 and 27 each of which has its own data bus 15 and 16, respectively.

Array data and control lines from the detector 11 are converted from balanced pair signals to TTL levels by an array interface card 18. This card also reconstructs the pixel addresses IPBUS ADDR 0 to IPBUS ADDR 9 which give a binary representation of the position of the diode element currently being read out. Also output to the IPBUS are the line start pulse SLL, and pixel data valid pulses VAL and IPVAL.

The 1/0 card 19 connects both to the main computer bus 15 and to IPBUS and allows a main system computer 25 to take control of the IPBUS for the purposes of reading and writing set-up data to the various IPBUS cards.

The busmaster DMA card 21 also connects both to the main computer bus 15 and to IPBUS and is instrumental in allowing array data to be written into the main system computer 25 image memory 26. This data is then analysed by system computer 25 at its leisure to calculate the various thresholds and masking details.

The processing card 23 forms the heart of the realtime data processing capability. The data from the IPBUS is constantly monitored by this card (and card 24 if provided) and if a contaminant is recognised, one of the IPBUS reject lines is activated. The reject interface card 22 responds to these signals, latching the rejects and interrupting a reject computer 27 associated with the computer bus 16 to inform of the presence of a contaminant. The reject computer 27 is essentially an indexing shift register which tracks the contaminant to the reject point, then activating the appropriate one or more reject outputs 28 via a digital output card 29. The reject computer 27 also performs a reject counting facility and records the time and quantity of rejects, passing this data when required to the main computer 25 via a parallel data unit omitted from Figure 2 for clarity.

The main computer 25 also controls various other system functions, i.e. motor speed, cooler monitoring etc, via analogue and digital lines (not shown). A serial 1/0 card 32 provides data to and from the main plant computer (PLC) (not shown).

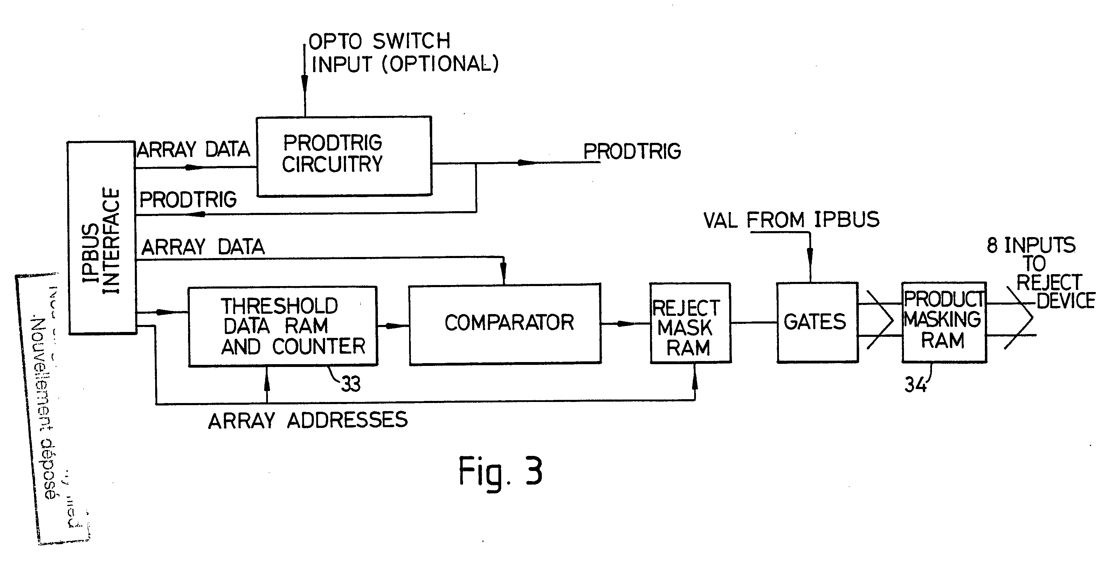

The general flow of data processing through the PROC card 23 and/or 24 is shown in Figure 3.

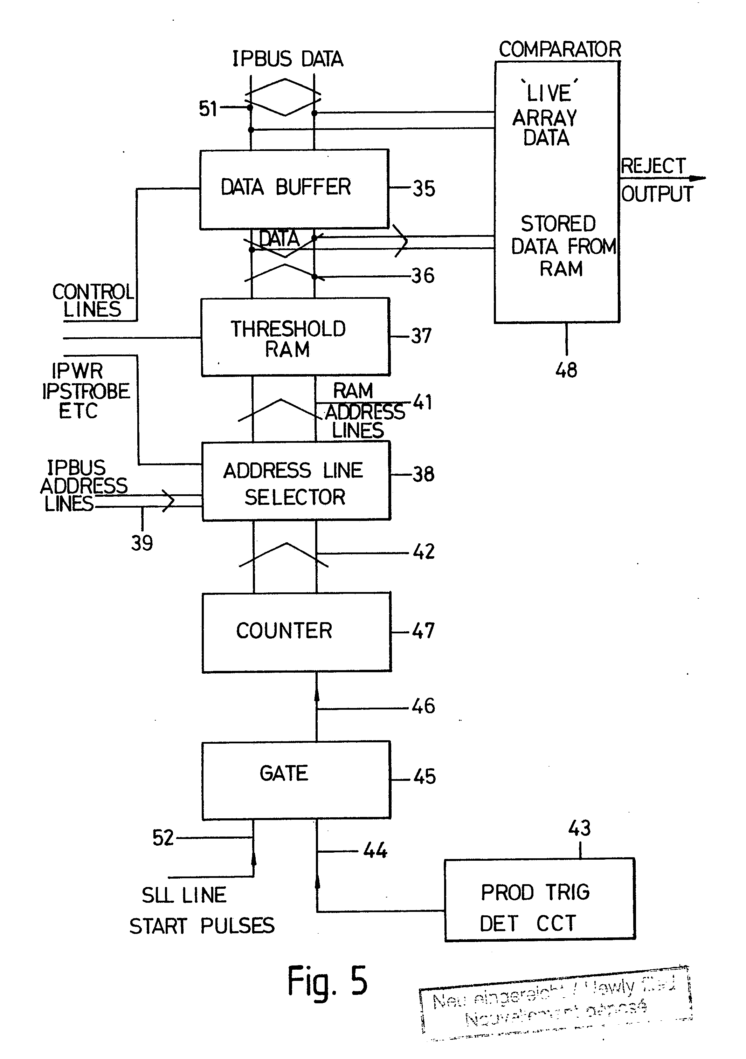

Automatic sensitivity values and multi-line thresholding arrangements are effected by a threshold data RAM section 33. Product masking data is effected in a product masking RAM 34. The threshold data RAM 33 is shown in greater detail in Figure 5.

In general terms, the image read into the computer 4 from the output of the diode array of the detector means 11 will normally have a white value of some particular value which typically may be of the order of 255. When a product 12 passes through the X-ray beam, the white level may reduce to about 100. If the product 12 contains a contaminant, then the white value at the contaminant may drop to a level of about 60. Therefore, for optimum detection, a threshold should be set at a white level of just below 100. However, in use of the system, there inevitably occurs drift in the operation of the diode array of the detector means 11 and of the X-ray flux from the X-ray source 1 which means that this threshold is likely to rise or fall giving either false analysis/rejects or loss of sensitivity. Similarly, a loose conveyed product may vary in depth during normal production processing, causing either a false rejection as the product becomes deeper and hence more dense, or a loss of sensitivity as the product layer becomes thinner and hence less dense. In order to give maximum sensitivity, the incoming signal from the detector means 11 needs to be constantly sampled and the threshold updated. In order to achieve this, the leading edge of the product 12 is detected and an image of 512 lines written into a memory of the computer 4. The computer 4 scans the memory and looks for the lowest pixel value. This is compared with the last calculated analysis/reject level. If the lowest pixel value is below the last calculated analysis/reject level, then it is ignored as probably being associated with a contaminant. However, if the range of pixels is approximately 105 - 95, then the lowest value of 95 will be used as the detection threshold minus a hysteresis offset, for example 5. Therefore, a value of 90 would be used as the analysis/rejection threshold. This process is repeated continuously so as to optimise the sensitivity.

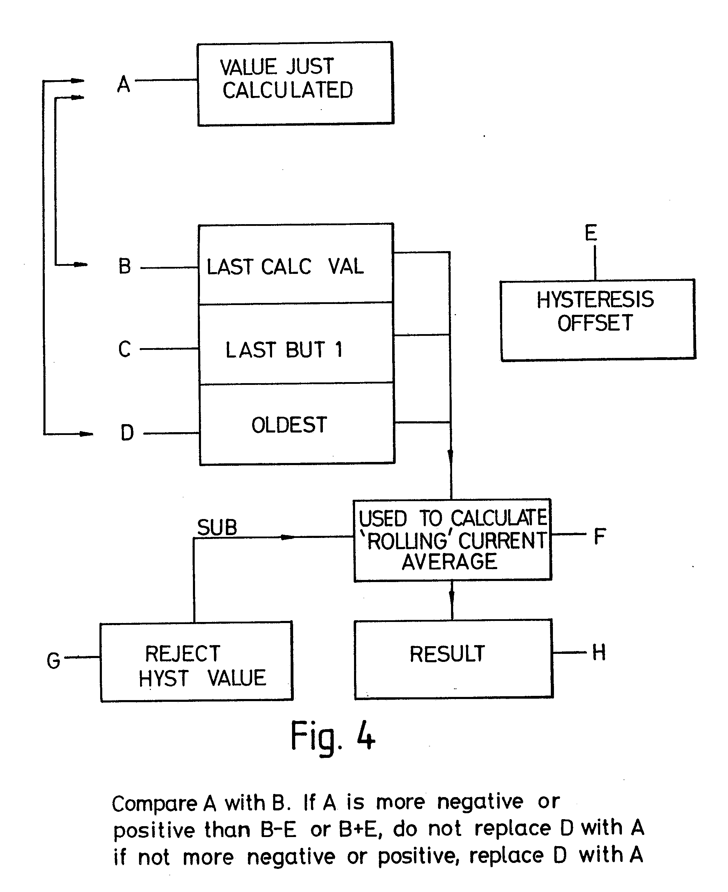

A more detailed description of the automatic sensitivity control follows with reference to Figure 4. The main system computer 25 requests a direct memory access transfer by the I/O card 19. This request may take one of two forms. A direct DMA request immediately "grabs" the next 512 lines of image data from the detector array 11 via the busmaster DMA card 21 and writes it into the image memory card 26. This type of DMA transfer is used when a mass flow product is being inspected as it may be assumed that a good sample of product is available for sampling at any one time. The second type of DMA transfer is initiated by PROTRIG, the IPBUS product detection line. This line is active during passage of product across the detector array 11. This is, therefore, the preferred method with packaged product as a DMA transfer may be "held off" until a package or item begins to cross the array. This form of transfer is termed an indirect DMA request.

Either form of DMA transfer is performed in parallel with normal system operation, i.e. the system may still inspect for contaminants during transfer; the live array data is simply read by both the DMA card 21 and the processing card(s) 23, 24 at the same time.

The 512K Byte image memory 26 now contains 512 stored lines of array data relating to the product under inspection. Each line consists of 1024 pixels or 1K Bytes of data. Each line or 1K Bytes of data is now scanned for the lowest pixel value occurring in that line. Referring to Figure 4, the system will have stored the last three lowest readings calculated for that line during the last three DMA transfers, values B to D. The value calculated in this cycle A is compared to that of the last previously calculated value stored at B. If A is more negative or positive than B, plus or minus hysteresis offset E, value A is disregarded as it is probably associated with a contaminant. If it does not deviate by more than the hysteresis offset E in either the positive or negative direction, value A is used to replace the oldest stored value D. These three values B, C, D are used to calculate a "rolling average" value F which, when subtracted by the reject hysteresis value G, gives the result H. Result H is then temporarily stored in memory until a value for all 512 lines has been obtained. If the system is used in "single line thresholding" mode, the lowest value only is used for transfer to all of the 512 locations of the threshold RAM. In the "multi line thresholding" mode, all 512 individual "H" values are transferred to the RAM.

There is now the task of transferring 512 values to the threshold RAM 33, a block diagram of which is shown in Figure 5. These values must be transmitted via the IPBUS whilst the system is still inspecting the product, so it is vital that no interruption of array data occurs. During the end of an array scan line but before the next begins, there exists a "flyback" time of a few microseconds. It is possible to transfer set-up data without interruption of realtime inspection processes during this period. Therefore, the process to be described will take place during these end of line periods.

During line flyback time, the IPBUS I/O card 19 will request the IPBUS. A data buffer 35 (Figure 5) will allow the IPBUS to be connected via a BUS 36 to the threshold RAM 37. An address line selector 38 will allow IPBUS address lines 39 to appear at the threshold RAM address lines 41. The appropriate address is sent to the RAM 37 along with the calculated data value. IPBUS control lines IPSTROBE and IPWR then write the value into the RAM 37. The IPBUS is then released and the next line of array data during real time inspection occurs. The IPBUS is then requested again at line end and the process repeats until all 512 values are written into the threshold RAM 37.

If the line start pulse for the next line has not occurred and a further byte of set-up data is to be transmitted, the IPBUS is again requested and the process repeats. When the SLL line start pulse eventually occurs, the set-up data transfer is suspended as the bus is required for the next line of array data.

The new set of 512 values are now in the RAM 37 and the data buffer 35 is inactive, cutting off live array data flow 36 to the RAM 37. The address line selector 38 now allows counter addresses on lines 42 to appear at RAM address lines 41.

If a mass flow product is being inspected, a PRODTRIG detection circuitry 43 never detects a start of product, so the RAM 37 is always read from location 0. However, PROTRIG may also be used for other processing board functions which will increment the RAM 37 address to the next line value. It is for this reason that the single threshold value is stored in all 512 locations of the RAM 37 and not just location zero.

During the inspection of packaged or wedge-shaped products, the operation is as follows. The PRODTRIG detection circuitry 43 generates a PROTRIG signal on line 44 which appears at one input of a gate 45. At the start of the next line, the array line start pulse SLL appears at the other gate input driving the output 46 active. This increments a counter 47 to the first line location, addressing the RAM 37 by the lines 42 through the address line selector 38 via the RAM address lines 41. THe data from the selected location of the RAM 37 is output on the data lines 36 to a reject comparator 48. Line real time array data 51 will now appear for one line (1024 pixels or Bytes) and will be compared to that on the RAM data lines 36. If array data 51 is below that of the RAM data 36 for any pixels, a reject pulse will be output for the duration of that pixel.

At the end of the line, an SLL line start pulse 52 will increment the RAM 37 to the next location. The process will repeat for each array line until all 512 locations of the RAM 37 are output or the PRODTRIG circuitry 43 detects that the product has passed the array. The counter 47 will then be reset to point to RAM location zero to await the next product item.

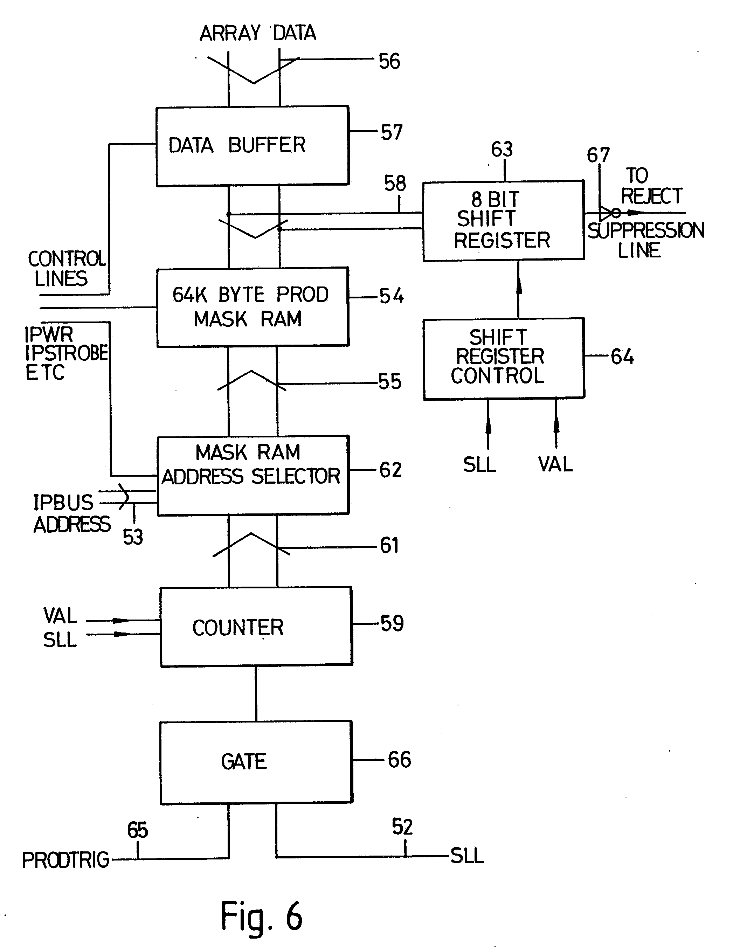

Referring now to Figure 6, this shows a block diagram of a product masking RAM circuitry. It will be noted that a generally similar layout to the multi-line thresholding RAM is used.

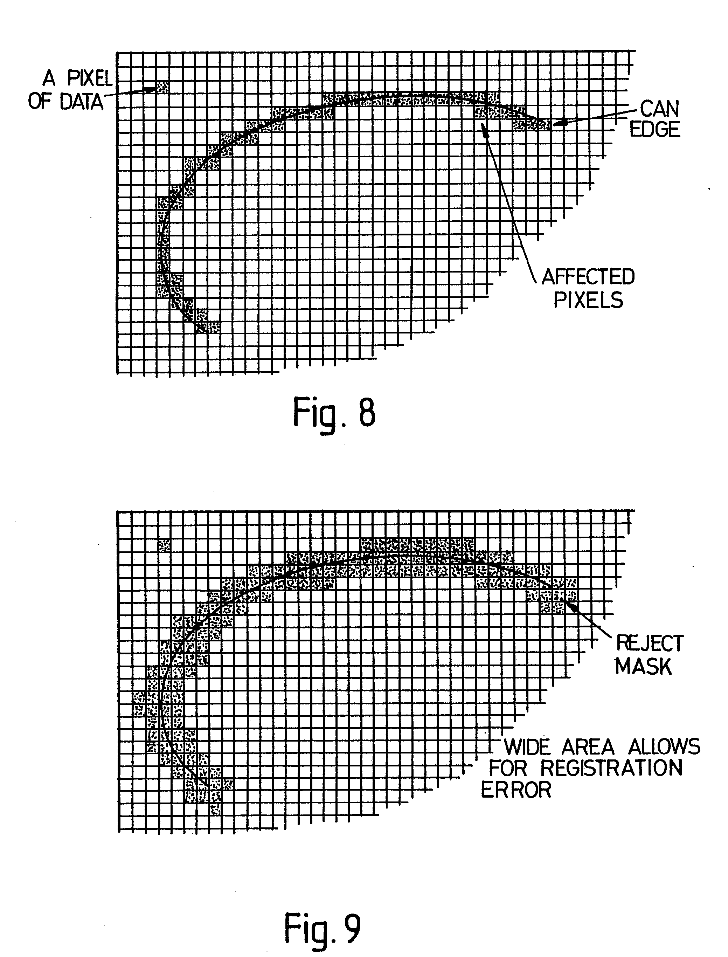

By use of an indirect DMA transfer as described in connection with the multi-line thresholding RAM circuitry, an image of the object, in this instance a can, is written into the 512 KB image memory 26. The X-ray flux will have been set such that the can edges appear very dark in relation to the background and can contents as can be seen in Figure 8. Any pixels or Bytes of data with can edge present will have a very low value, i.e. 40 or so. The main system computer 27 will now scan the 512 KB image memory line by line, building up a border around the can edge in memory of pixel value zero. The width of this border is able to be set in software to give a degree of registration error for the positions of subsequent cans. The actual border width will depend upon can size and belt speed. The border is shown in Figure 9. The bordered can image is now ready for transfer to the product masking RAM. The IPBUS is requested and the flow of array data and address lines is interrupted. The set up and acquisition of a reject mask is performed "off line" and not during real time inspection. Therefore, data may be transferred continually and not just one Byte at line end.

IPBUS address lines 53 now appear at the masking RAM 54 via lines 55. IPBUS array data 56, via data buffer 57, now appears at lines 58 of masking RAM 54. These lines are now under system computer control. Each line in the 512KB image memory 26 is now examined 8 Bytes at a time. If a value equal to the can edge or mask is present, a corresponding Bit is set in a 1 Byte holding area. If no can edge or border is present a Bit is reset in the appropriate location in the holding Byte. When all 8 Bits are complete, the holding Byte is transmitted to the first location of the masking RAM 54. This process is completed for the entire image memory and transferred to all 64K locations of the masking RAM 54. The IPBUS is now released by the main system computer 25, ready for the first real time inspected can to appear.

The array data buffer 57 is now in a high impedance state, preventing array data from appearing at the product masking RAM bus 58. A counter 59 has its outputs connected, via lines 61 to a mask RAM address selector 62, appearing at the masking RAM 54. These address lines point to location zero in the RAM 54. The first Byte from the RAM 54 appears at the bus 58 and is applied to a shift register 63. A shift register control 64 latches the first Byte into the shift register 63 and the output Bit of this register is connected to REJSUPR (reject suppression line) of the IPBUS. As the first can cuts the beam of the X-rays to the detector array 11, the PROTRIG signal on line 65 is active along with the SLL line start pulse at gate 66 at line start. This sets the counter 59 at the zero location previously described. The first Bit from the shift register 63 is strobed out onto the IPBUS REJSUPR via an inverter 67. If the Bit output from the shift register 64 is set, then REJSUPR is active and a reject will be suppressed for that pixel.

The next Byte of array data now appears and the next Bit is shifted out of the shift register 64. The process as previously described is repeated until all 8 Bits are strobed out of the RAM 54. At the end of the 8th pixel, the counter 59 points to the next location of the mask RAM 54. Data from the RAM 54 is then latched into the shift register 64 where the process previously described is repeated for these new 8 Bits of data. This process continues for the 1st array line up to a maximum of 512 scan lines of array data. At the same moment of data transfer, the can is passing over the array in synchronism with the masking data output from the masking RAM. In this way, an object with dense edges may be masked to enable it to be inspected without false triggering on can edges.

When the can has passed, or 512 scan lines are completed, the PROTRIG signal line 65 goes inactive, allowing the counter 59 to be reset to zero to await the next can for inspection.

A mechanism similar to that just described may also be employed to enable product voiding, pack fill measurement and low density contaminant detection.

The functions above are performed by a thresholding process, similar to that described above for dense contaminant detection. However, to enable detection of low density contaminants, an over-threshold detector is required, where a void, lack of pack fill or low density contaminant will actually cause a rise in the value of the output signal from the detector array 11.

Using this over-threshold mode of detection, it will be necessary to place some form of restraint on the actual range of detection. This will be required as, in the example of a discreet package not covering the whole of the detector area, high value peak white or similar values will naturally be produced in areas not covered by the inspected product.

Two methods may be used to solve this problem.

1. Two "under-density" thresholds may be used, where the lower limit, set at, for example, 200, acts as the thresholding point over which an under-density detection occurs. A second upper threshold serves to limit the upper range of under-density detection. If this upper threshold were set to 230, then all pixels occurring with a level of 200 to 230 would constitute an under-density reject.

Values above the upper threshold, in this example 230, would not be detected as they will be equivalent to those values produced by the detector where no product is present. This method may be accomplished using two over-threshold detectors operable to determine the lower and upper limits of the over-threshold detection, with any detection between these limits constituting an under-density reject. The two detectors may be connected to an AND gate, with the input from the upper limit detector being inverted. When the lower limit detector senses that a void is present above the set threshold, a positive (ONE) output is produced. When the upper limit detector detects that the void is below the maximum limit, it will give a ZERO output, with this output inverted to a ONE and output to the AND gate simultaneously with the lower limit detector output, the two positive (ONE) pulses producing a RESET pulse from the AND gate.

2. A masking RAM, similar in operation to that described for use with dense boundaried objects, may be used. Take the following example:

A box of 48 chocolate bars, in four layers of 12, is to be inspected. The task is to determine whether or not all 48 bars are present in the box. It may be assumed, that allowing for a certain degree of lateral bar movement, that all four layers will be stacked upon each other such that a central area of each column of bars will always produce a density reading from the detector equivalent to the radiological density of those 4 bars. If the pack were masked, such that the under-density detection circuit examined only those areas of the box where bars will always be 4 layers thick, then an over-threshold would occur if one bar was missing or misplaced in the pack. This is because one missing bar will cause a reduction in X-ray attenuation at that point, resulting in a higher signal output from the detector.

The mask required may be produced by either software means, described above in relation to Figure 9, or by the use of a dense template mask. The dense template mask may take the form of a metal sheet of similar size to the package to be inspected.

In the chocolate bar example, the template mask would be approximately the size of the box containing the 48 bars. Slots or apertures may be cut in the template at the points where over-threshold detection is to occur. This template mask would then be passed through the system in the same manner as subsequent packages for inspection. By use of the product trigger and DMA means described earlier, an image would be captured of the dense mask. Areas containing mask will produce a very low signal from the detector (less than 30 grey levels or so). Areas requiring inspection would produce high level output (255 or so). The 512 KB image memory would then be searched and a BIT pattern generated in a masking RAM as described earlier.

As subsequent packages are presented for inspection, low value BITS (O) output from the masking RAM and representative of those areas where the mask was present, will suppress the over-threshold detection. High value areas, (BIT set to 1 in mask RAM) would turn on inspection as these relate to the original aperture areas of the masking template.

The method described may also be used as an alternative means of ignoring the edges of a dense container. The mask could be made of such a size that the registration areas required to align the can, jar or package, were directly generated by use of the masking template.

As regards drift of the detector means 11, it is inevitable that the drift will vary across the diode array so that there is no uniform increase or decrease in the general level of the output. Instead, the level increases or decreases inconsistently across the array and would thus give rise to a striped or so-called "deckchair" effect on the VDU 5 and 7 if such are employed. In contrast, any drift in the X-ray flux is uniform and thus does not give rise to the deckchair effect but nevertheless, it is advantageous to compensate for such variation. In order to stabilise the diode array as far as possible as regards drift, the array 11 is contained within a thermostatically controlled housing 68 which is electrically heated by elements 69 and incorporates a circulating fan 71 to ensure an even temperature throughout. The temperature is preferably controlled by a temperature control sensor 72 to within $2\,^{\circ}$ C of a predetermined temperature, the temperature being monitored by the system computer 4.

In operation of the system, a product is inspected as described above and if the system is designed to detect and remove contaminants, an output signal indicative of the presence of a contaminant is used to initiate the operation of some form on contaminant-remover apparatus which may be a punch or air-blast mechanism, for example. The initiating signal provides the coordinates of the contaminant so that the removal apparatus can position itself appropriately and automatically without human intervention. If the system is designed to analyse the contents of a product to ensure a consistent product, then this output signal can be used to vary the ingredients of the product and/or process parameters. In addition, or instead of, the output signal can be applied to a display and/or a printing mechanism for producing a label indicating the proportions of the ingredients of the product or lean/fat content, for example. A manual override may be provided in order to allow operator intervention, perhaps to remove a contaminant not detected by the system.

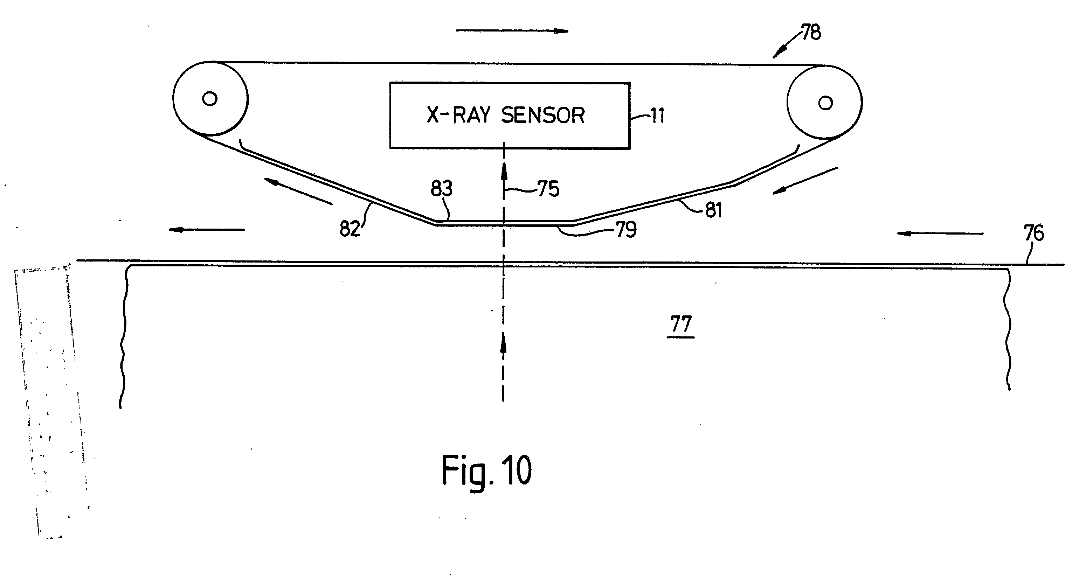

Turning now to Figure 10, this shows another embodiment of the present invention in which the product under inspection is presented to the X-ray beam at a controlled thickness, the X-ray beam from the source 1 (not shown) being indicated at 75. The product (not shown) is conveyed through the X-ray beam 75 on a flat lower conveyor 76 having a support 77 extending over at least a portion of its length and beneath an upper conveyor 78 which is linear over a central portion 79 of its lower run. On the infeed side of the central portion 79 of the lower run of the upper conveyor 78, the lower run converges towards the central portion as indicated at 81, and diverges away from the central portion on the outfeed side thereof as indicated at 82. The portions 79,81,82 of the lower run of the upper conveyor 78 are defined by a correspondingly shaped plate 83 over which the lower run travels.

As the product such as meat or chicken portions, for example, travels on the lower conveyor 76 it is gradually squeezed as it passes under the converging portion 81 of the upper conveyor 78 until it is at a substantially uniform thickness, and under maximum pressure, as it passes through the X-ray beam 75. In this way, voids in the product are substantially eliminated and hence a more accurate inspection/analysis made of the product. Once the product has passed through the X-ray beam 75, it is allowed to expand to its original size and shape by the diverging portion 82 of the upper conveyor 78. Thus there is no permanent deformation of the product.

The speeds of the upper and lower conveyors may be varied and the conveyors 76,78 may have a differential speed. Furthermore, the angle of the converging and/or diverging portions 81,82 of the upper conveyor 78 may be varied as well as the length of the central portion 79, and as well as the gap between the central portion and the lower conveyor 76. Side rails (not shown) may be provided to contain the product laterally of the conveyors 76 and 78.

According to another aspect of the invention, analysis can be made of the fat/lean content and/or bone content of meat for which the autosensitivity feature is not necessarily required.

Fat and lean have different absorption rates, thus from the absorption attenuation at any detector it is possible to calculate the fat/lean ratio at that point, similar measurements across the detector producing a fat/lean ratio for that "slice" of product. These figures can be continuously updated. Knowing the sample thickness and the material source (flank, brisket etc) will enable this fat content to be converted into chemical fat (lipid) content, the parameter required by the analyst. Interrogation of the registers will indicate material variability, as well as allow predictive product control by means of least cost formulation techniques, even calorific content if required. The addition of moisture measurement will allow protein, fat and moisture data to be produced continuously or by batch.

Bone can also be measured in a similar manner. Therefore, for portion control items such as pork chops, bone, or bone with overlying fat/lean can be measured and with each component having a monetary value, the item can be priced according to its composition.

Different absorption factors will apply depending on whether the meat is frozen, fresh or cooked. Conversion factors will also be different.

It will be seen that the present invention provides an on-line system with a number of advantages which are set out below and which give rise to a significant advance in the art of product analysis.

## Advantages

1. The system does not require any visual inspection so that there is no need to synchronise the movement of the product relative to the detector means with the detector scanning rate in order to achieve a picture with a visually correct aspect ratio. Furthermore, the system can accommodate a product moving at up to 60 metres per minute which is an order of magnitude higher than the known systems for inspecting baggage, for example.

2. The system does not need to be shut down in order to effect recalibration as calibration is an on-going process.

3. The system is capable of being fully integrated with a plant process into which it is incorporated.

The present invention finds a number of applications, some of which are set out below:-

1. The detection of high or low density contaminants in food products. This detection can be carried out with products in fresh or frozen conditions and in respect of liquids, solids and slurries. Inspections can take place with products in containers such as cans, jars, bottles, foils, pouches and card packaging.

2. Non-destructive testing of electronic and medical disposables, etc.

3. Automatic detection of incorrectly packed products, for example the detection of missing, damaged or misplaced chocolate bars in a packed carton thereof.

4. Automatic non-contact measurement of the mass or volume of a product in a container by virtue of its radiation absorption. For example, check weighing can be accomplished at high speed without the need to space the items to take a measurement. Measurement of volume by weight is an accurate guide to product quantity supplied.

5. Quality control and quality assurance by inspection and grading of products consisting of several random constituents of differing radiation absorptions, for example mixed foods, components in a container.

6. Use in robotic butchery by providing positional information about bones and/or cutting devices. This is applicable to both meat and fish.

·7. Fat/lean/bone analysis in controlling portions of food. This can be useful in the pricing of prepared cuts/portions of red/white meat.

8. Fat/lean analysis of frozen or fresh meat. For the analysis of block frozen meats, the block would be passed through the equipment which would enter into its memory a large sampling of radiation absorption points across the block length and width. This radiation absorption factor combined with the weight and moisture level of the block, also measured by the system, would be analysed by the system computer to produce the fat/lean ratio. An output could be generated by the computer for application to a printer which would print the result of the analysis on a label for application to the product as a guide to the commercial buyer or user of the product, such as a manufacturer of food products.

This type of analysis is applicable to all types of boneless meats (minced or ground) and blended (provided the raw materials are known). It is also possible to measure the moisture content using a moisture detector, whereby there is a capability of producing a total protein/fat/moisture analysis.

The presentation of a product to the system can be critical and the following different presentations can be employed:-

1. The use of a de-aired pumped stream of fresh meat to remove voiding in the product cross-section.

2. The use of water to remove voiding in irregular products of similar radiation absorption to water by the following means:-

a. use of a dip-conveyor which transfers the product through a water bath during the period of inspection. Any surface ice which may form can readily be removed by pressing with rollers.

b. the use of a spray of water onto the product, the product then being compressed by converging conveyors or rollers so as to produce a substantially homogeneous controlled cross-sectional thickness. This method can be applied to fresh or frozen and cooked food products. Compression may be effective with certain products without the addition of water.

c. adding water and pumping the product through the system.

d. merely compressing the product to remove the voids such as by the use of :-

(i) single roller

(ii) multiple rollers

(iii) Roller/conveyor

(iv) Compressed slabs on conveyor with restrainer jig, apparatus, frame, etc.

Any natural juices expressed by the application of pressure will be reabsorbed into the voids on release of that pressure. This technique is applicable to both fresh and cooked products and no permanent physical deformation occurs and no measurable protein loss is occasioned.

3. The, use of multichannel manifolds of stainless steel with a synthetic plastics polycarbonate insert through which the x-ray beam passes to inspect powder, liquid and slurried products of several separate processes with one x-ray system.

Table 'A'        IPBUS  SIGNALS  AND  PINOUTS

(Connector = 64w DIN 41612 AB Type)

| PIN No. | Signal Name |
|---------|-------------|
| 1 A | +5v Supply |
| 1 B | +5v Supply |
| 2 A | 0v Supply |
| 2 B | 0v Supply |
| 3 A | +12v Supply |
| 3 B | -12v Supply |
| 4 A | # *REJOP 0*    (Reject output   0) |
| 4 B | # *REJOP 1*    ( "        "      1) |
| 5 A | # *REJOP 2*    ( "        "      2) |
| 5 B | # *REJOP 3*    ( "        "      3) |
| 6 A | # *REJOP 4*    ( "        "      4) |
| 6 B | # *REJOP 5*    ( "        "      5) |
| 7 A | # *REJOP 6*    ( "        "      6) |
| 7 B | # *REJOP 7*    ( "        "      7) |
| 8 A | # *REJSUPR*    (Reject suppress line) |
| 8 B | *ATNRQ*        Stebus interrupt line |
| 9 A | *DMAREAD*      Indicates valid data during DMA cycle. |
| 9 B | *SEL 0*        Function select line |
| 10 A | *SEL 1*        "        "        " |
| 10 B | *SEL 2*        "        "        " |
| 11 A | *SEL 3*        "        "        " |
| 11 B | # *IPBUSDATRQ*  IPBUS data request line. Leaves data high impedance |
| 12 A | ! IPBUS 0      Image data lines |
| 12 B | ! IPBUS 1      "        "        " |
| 13 A | ! IPBUS 2      "        "        " |
| 13 B | ! IPBUS 3      "        "        " |
| 14 A | ! IPBUS 4      "        "        " |
| 14 B | ! IPBUS 5      "        "        " |
| 15 A | ! IPBUS 6      "        "        " |
| 15 B | ! IPBUS 7      "        "        " |
| 16 A | 0v Supply |
| 16 B | 0v Supply |
| 17 A | ! IPBUSADD 0   Image address lines |
| 17 B | ! IPBUSADD 1   "        "        " |
| 18 A | ! IPBUSADD 2   "        "        " |
| 18 B | ! IPBUSADD 3   "        "        " |
| 19 A | ! IPBUSADD 4   "        "        " |
| 19 B | ! IPBUSADD 5   "        "        " |
| 20 A | ! IPBUSADD 6   "        "        " |
| 20 B | ! IPBUSADD 7   "        "        " |
| 21 A | ! IPBUSADD 8   "        "        " |
| 21 B | ! IPBUSADD 9   "        "        " |

Section 6.                                    Page 2.

Cont/.

| Pin No. | Signal Name | |
|---|---|---|
| 22 A | ! IPBUSADD 10 | Image address lines |
| 22 B | ! IPBUSADD 11 | " " " |
| 23 A | ! IPBUSADD 12 | " " " |
| 23 B | ! IPBUSADD 13 | " " " |
| 24 A | ! IPBUSADD 14 | " " " |
| 24 B | ! IPBUSADD 15 | " " " |
| 25 A | SLL | Array line start pulse |
| 25 B | VAL | Array pixel pulse |
| 26 A | IPVAL | Extended VAL (700 nS) |
| 26 B | *EOL* | End of Line (1024th Pixel) pulse. |
| 27 A | # *IPBUSRQ* | IPBUS request line. Requests both data and address lines leaving them high impedance. |
| 27 B | # *Frame Grab* | Causes 512 KB of data to be stored in memory. |
| 28 A | *PRODTRIG* | Packaged product passing across array. |
| 28 B | # *Frame Read* | Transfer 512 KB from STE memory to simple frame store and display. |
| 29 A | *Frame Grabbed/Readend* | Indicates functions completed. |
| 29 B | *IPSTROBE* | Strobes valid data on BUS. |
| 30 A | *IPWR* | Data direction line. |
| 30 B | *SYSRST* | STEBUS system reset line. |
| 31 A | Ov Supply | |
| 31 B | Ov Supply | |
| 32 A | + 5v Supply | |
| 32 B | + 5v Supply | |

# = Line is open collector driven

! = May be driven high impedance

* * = Active Low

## Claims

1. An on-line material inspection system comprising collimator means operable to produce a planar beam of X-rays through which beam material to be inspected is in use passed, detector means in the form of a linear array of photo-sensitive means spaced from, and located opposite, the source of X-rays and arranged in substantially the same plane as the beam of X-rays, the detector means being operable to detect the X-rays passing through the material under inspection and provide an output signal representative thereof, system control means comprising real-time data processing means operable to receive the output signal from the detector means and analyse that signal and to produce an output signal on the basis of the analysis, the control system also comprising automatic sensitivity control means operable to maintain substantially constant the sensitivity of the inspection system irrespective of any drift which may occur in the detector means and/or source of X-rays.

2. A system according to claim 1, wherein the automatic sensitivity control means comprises variable threshold means, the threshold being continually monitored and updated, whereby the sensitivity of the system remains substantially constant.

3. A system according to claim 1, wherein the automatic sensitivity control means comprises multiple thresholding means, whereby material having a variable cross-sectional thickness can be inspected.

4. A system according to claim 3, wherein means are provided detecting the leading edge of a product under inspection as it breaks the X-ray beam, and wherein the multiple thresholding means comprises means for applying a first predetermined threshold for a given period of inspection of that material, then applying a second predetermined threshold for a given period of time and so on until all of the material has been inspected.

5. A system according to claim 1, wherein means are provided for inspecting products having areas of a density greater than the remainder, the data processing means being operable to calculate the denser area with a predetermined hysteresis and then to search memory means for any pixels in the memory with a value lower than the calculated number and if one is found to build up around it an area of value zero to enable a level of registration error to be accepted, this procedure being performed throughout the memory and the memory then scanned for any pixels lowers than, or equal to, the value of the built up area, any pixels found being written into a memory mask, the memory mask data being strobed out as each data byte from the detector means is output.

6. A system according to claim 1, wherein means are provided for inspecting products having areas of a density lower than the remainder, said means comprising over-threshold detector means in the form of two over-threshold detectors operable to determine lower and upper limits of over-threshold detection with any detection between these two limits constituting an under-density reject.

7. A system according to claim 1, wherein means are provided for inspecting products having areas of a density lower than the remainder, said means comprising over-threshold detector means, and masking means in the form of a template cut away at an area or areas at which over-threshold detection is required, the mask being passed through the system in the manner of a product being inspected, memory means in the processing means being operable to memorise the pattern of the mask against which a product subsequently inspected is compared.

8. A system according to any of the preceding claims, and further comprising converging conveyor means operable to convey material under inspection to the collimator means.

9. A system according to claim 8, wherein the converging conveyor means has a variable infeed and outfeed angle.

10. A method of on-line material inspection comprising the steps of providing a planar beam of X-rays through which material to be inspected is in use passed, detecting the X-rays passing through the material under inspection and providing an output signal representative thereof, providing real-time data processing means operable to receive said output signal and analyse that signal and to produce an output signal, providing mask means having one or more areas cut therefrom appropriate to the material being inspected, passing the mask means through the X-ray beam, memorising the resultant detected output signals and comparing detected output signals from material under inspection with said memorised signals to produce a signal indicative of required material density.

11. A material inspection system comprising X-ray inspection means and conveyor means operable to conveyor material to be inspected to the X-ray inspection means, the conveyor means comprising converging upper and lower conveyors arranged such that the material is presented to the X-ray inspection means at a controlled thickness.

12. A system according to claim 11, wherein the converging conveyors comprise a substantially flat lower conveyor operable to carry a product to be inspected, and an upper conveyor the lower run of which has a first portion which converges with the lower conveyor, and a second portion substantially parallel to the lower conveyor, whereby when the product is between said second portion and the lower conveyor it is of a substantially uniform thickness, and wherein the product is presented to the X-ray inspection when it is at said uniform thickness.

13. A system according to claim 12, wherein the lower run of the upper conveyor has a third portion which diverges away from the lower conveyor, the third portion being on the side of the second portion remote from the first portion.

14. A system according to claim 12 or 13, wherein the infeed angle of the first portion is variable.

15. A system according to claim 13, wherein the outfeed angle of the third portion is variable.

16. A system according to any of claims 12 to 15, wherein the length of the second portion is variable.

17. A system gccording to any of claims 12-16, wherein the gap between the second portion of the lower run of the upper conveyor and the lower conveyor is variable.

18. A system according to any of claims 11 to 17, wherein means are provided for retaining the product on the conveyors as it is compressed thereby.

19. A system according to any of claims 11 to 18, wherein the speed of one or both conveyors is variable.

20. A system according to any of claims 11 to 19, wherein the speeds of the conveyor are different.

13

Fig. 1

EP 0 375 157 A2

SERIAL
I/O

ANALOG
+
DIGITAL
I/O

I/O
CARD

32

SERIAL

512KB IMAGE
MEMORY

COMP

26

25

15

28

REJECT
OUTPUTS

29

REJECT I/O

REJECT CPU

COMP

27

16

ARRAY DATA

19

18

ARRAY INTERFACE CARD

I/O CARD

DMA CARD

21

23

PROC CARD

24

PROC CARD

REJECT INT

22

Fig.2

IPBUS

IPBUS

Neu eingereicht / Newly filed
Nouvellement déposé

EP 0 375 157 A2

Fig. 3

EP 0 375 157 A2

A — VALUE JUST
CALCULATED

E

B — LAST CALC VAL

C — LAST BUT 1

D — OLDEST

HYSTERESIS
OFFSET

SUB — USED TO CALCULATE
'ROLLING' CURRENT
AVERAGE — F

G — REJECT
HYST VALUE

RESULT — H

## Fig. 4

Compare A with B. If A is more negative or
positive than B-E or B+E, do not replace D with A
if not more negative or positive, replace D with A

Fig. 5

ARRAY DATA

56

DATA BUFFER —57

58

8 BIT
SHIFT
REGISTER —63

67 TO
REJECT
SUPPRESSION
LINE

CONTROL
LINES

64K BYTE PROD
MASK RAM —54

SHIFT
REGISTER
CONTROL —64

IPWR
IPSTROBE
ETC

55

MASK RAM
ADDRESS SELECTOR —62

SLL        VAL

IPBUS
ADDRESS

53

61

VAL
SLL

COUNTER —59

GATE —66

65

52

PRODTRIG

SLL

## Fig. 6

EP 0 375 157 A2

Fig. 7

A PIXEL OF DATA

CAN EDGE

AFFECTED PIXELS

Fig. 8

REJECT MASK

WIDE AREA ALLOWS FOR REGISTRATION ERROR

Fig. 9

X-RAY SENSOR — 11

83  75  82  79  81  78  76  77

Fig. 10

EP 0 375 157 A2